# EUROPEAN PATENT SPECIFICATION

(11) **EP 0 920 267 B1**
(45) Date of publication and mention of the grant of the patent: **21.11.2001**
(21) Application number: 97935772.0
(22) Date of filing: 08.08.1997
(51) Int. Cl.: A47B 47/00, F16B 12/44

(54) **DEVICE FOR CONNECTING AT LEAST ONE LATH ELEMENT, AND RELATIVE BUILD-UP STRUCTURE**
VORRICHTUNG ZUM VERBINDEN VON MINDESTENS EINEM TRAGELEMENT UND RELATIVER AUFBAUSATZ
DISPOSITIF DE CONNEXION D'AU MOINS UN ELEMENT DE LATTE ET STRUCTURE DE CONSTRUCTION RELATIVE

(30) Priority: 09.08.1996 IT MI961736
(43) Date of publication of application: 09.06.1999
(73) Proprietor: Nettis, Francesco, 70124 Bari (IT)
(72) Inventor: NETTIS, Francesco, I-70124 Bari (IT); FILIPPI, Francesco, I-48022 Lugo (IT); SANTARPIA, Carmine, I-70032 Bitonto (IT); CONSIGLIO, Giuseppe, I-70021 Acquaviva delle Fonti (IT)
(74) Representative: Cerbaro, Elena, Dr.
(86) International application number: IT9700208
(87) International publication number: WO9806301

(56) References cited:
- EP-A- 0 131 149
- EP-A- 0 344 120
- CH-A- 483 819
- DE-A- 4 437 051
- DE-A- 19 541 399
- DE-U- 29 506 323

## Description

### TECHNICAL FIELD

The present invention relates to a device for connecting at least one lath element, and to the relative build-up structure.

### BACKGROUND ART

In the furnishing and building industry in general, connecting devices are known for reversibly connecting two or more elements, the whole formed by the connecting devices and connected elements at times defining a build-up, in particular a modular build-up, structure.

German Patent Application DE-A-3 510 920 (Holdapp), for example, describes a connecting device for reversibly connecting horizontal lath elements to a vertical supporting element, and which substantially comprises a central metal ring from which holes, possibly threaded, radiate in four perpendicular horizontal directions and cooperate with fastening means embedded in the horizontal lath elements.

In DE-A-3 510 920, the metal ring is fitted to the vertical supporting element by tightening a vertical lock element, which, however, fails to provide for sufficient stability of the horizontal laths, due to any stress on the horizontal laths being transmitted to the metal ring and loosening the grip of the lock element on the ring, thus impairing the overall rigidity of the structure.

Another German Patent Application DE-A-4 327 628 (Scholze) describes a device for connecting two lath elements, which comprises a main outer body formed in one piece from a first material, and a bush substantially housed inside the main outer body and made of a second material other than the first. The bush, however, is formed in one piece comprising two perpendicular threads for receiving complementary connecting means on the two lath elements. A drawback of the connecting device described in the above application is that some screws engage through the wood, thus preventing the connection of lath elements having narrow sections.

Furthermore, in EP-A-0 131 149 it is disclosed a device connecting two lath elements, the device comprising a main outer body formed in one piece from a first material, and at least one resisting element having connecting means for connecting the lath elements. The resisting element comprises a number of parts substantially housed in the main outer body, and being made of a second material, other than the first material, for resisting mechanical stress. However, the device shown in EP-A-0 131 149 does not provide any spiderlike resisting element able to connect a plurality of lath elements.

Moreover, DE-A-195 41 399 describes a device connecting at least one lath element. The device comprises a main outer body formed in one piece from a first material, and at least one resisting element having connecting means for connecting the lath element. The resisting element is substantially housed in the main outer body and is made of a second material (plastic), other than the first material, for resisting mechanical stress. However, each resisting element described in DE-A-195 41 399 must be fitted in its own bore provided through the main outer body. The plugging of each resisting element in the relevant bore is achieved by pressing the resisting element with a consequent deformation. Thus, the strength provided by each resisting element is inadequate to bear the considerable weights charged on the lath elements.

### DISCLOSURE OF INVENTION

It is an object of the present invention to eliminate the aforementioned drawbacks.

According to the present invention, there is provided a device for connecting at least one lath element as claimed in claim 1.

The connecting device according to the present invention provides for reliable connection of the lath elements in terms of mechanical strength, as well as for attractive appearance by ensuring continuity of the material between the lath elements and the main outer body.

Moreover, the resisting element housed substantially inside the main outer body may be broken down easily into its component parts, which may be used to form connecting means in 2-6 perpendicular directions as required by the user.

Depending on the type of resisting element used, the connecting devices may either be formed in the factory or supplied by the maker in kits for on-the-spot assembly.

### BRIEF DESCRIPTION OF THE DRAWINGS

A number of non-limiting embodiments of the present invention will be described by way of example with reference to the accompanying drawings, in which:
Figure 1 shows a section of a first embodiment of the connecting device according to the present invention;
Figure 2 shows the Figure 1 connecting device in conjunction with a number of lath elements for forming a build-up, in particular a modular build-up, structure;
Figure 3 shows the Figure 1 device formed in one piece with a respective lath element forming part of a build-up structure;
Figure 4 shows a view, with parts removed for clarity, of a second embodiment of the connecting device according to the present invention;
Figure 5 shows a larger-scale view of the component parts of the second embodiment in Figure 4;
Figure 6 shows a third embodiment of the present invention;
Figure 7 shows a fourth embodiment of the present invention;
Figure 8 shows connecting means, complementary connecting means and fastening means which may be combined with the connecting device according to the present invention.

### BEST MODE FOR CARRYING OUT THE INVENTION

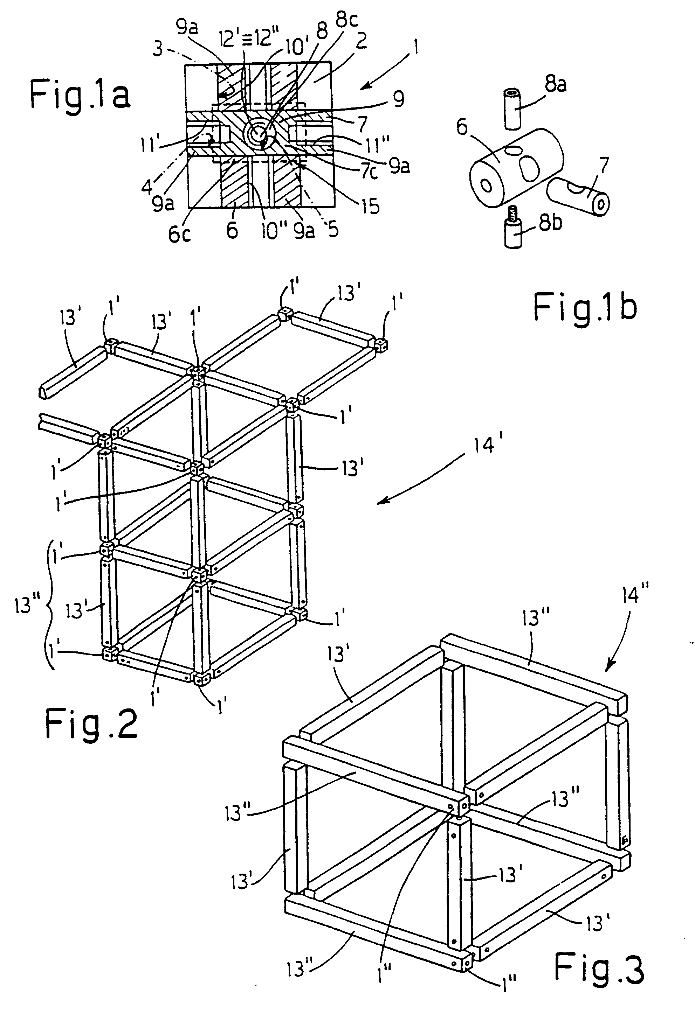

Number 1 in Figure 1a indicates the connecting device as a whole for connecting at least one lath element (not shown in Figure 1a).

Connecting device 1 in the first embodiment shown comprises a main outer body 2 (e.g. advantageously made of wood, plastic or glass) in turn comprising three through holes 3, 4, 5, which are combined with respective bushes 6, 7, 8 (Figure 1b) to form a spiderlike resisting element 15. Bushes 6, 7, 8 are in turn so formed that the central portions 6c, 7c, 8c, when fitted one inside the other, form a central core 9 for resisting any mechanical stress generated by and on the lath elements; and the portions of bushes 6, 7, 8 not forming part of core 9 define a number of arms 9a, perpendicular or not, comprising connecting means for connection to complementary connecting means on the lath elements 13' (Figure 2). More specifically, and as shown in Figure 1b, bushes 6 and 7 are each formed in one piece, whereas bush 8 comprises two portions 8a, 8b which are screwed together. Bushes 6, 7, 8 may advantageously be made of metal, in particular steel or aluminium, and each comprise at the ends respective female elements 10',10"; 11',11"; 12',12" defining the connecting means for connection to the complementary connecting means (not shown in Figure 1) on the lath elements (not shown in Figure 1) combined with device 1.

To anyone skilled in the art, it will be clear that female elements 10',10"; 11',11"; 12', 12" may be replaced by any male element for connecting device 1 to at least one lath element.

Figure 2 shows a number of devices 1' combined with a number of lath elements 13' to form a build-up structure 14', which may be used, for example, as the supporting structure of a piece of furniture (not shown), and which may comprise lath elements 13' of different lengths.

Series of devices 1' combined with series of lath elements 13' may also be devised for forming modular structures 14' for any application.

In Figure 2, devices 1' provide for connecting at least two lath elements 13', which comprise, at the ends, complementary connecting means, in particular male means (not shown in Figure 2), for connection to female elements 10',10"; 11',11"; 12',12" of respective devices 1'.

It should be pointed out that, herein, a "build-up" element is intended to mean an element which may be connected to others to form a more complex structure; whereas a "modular" structure is intended to mean a structure comprising individual elements of the same size, or which are proportional to or multiples of one another.

Figure 3 shows a build-up structure 14" comprising both lath elements 13' and 13", and wherein lath elements 13" house (at the ends) respective connecting devices 1" defining connecting means for direct connection to other lath elements 13", or for indirect connection to lath elements 13' via the interposition of respective connecting devices 1'.

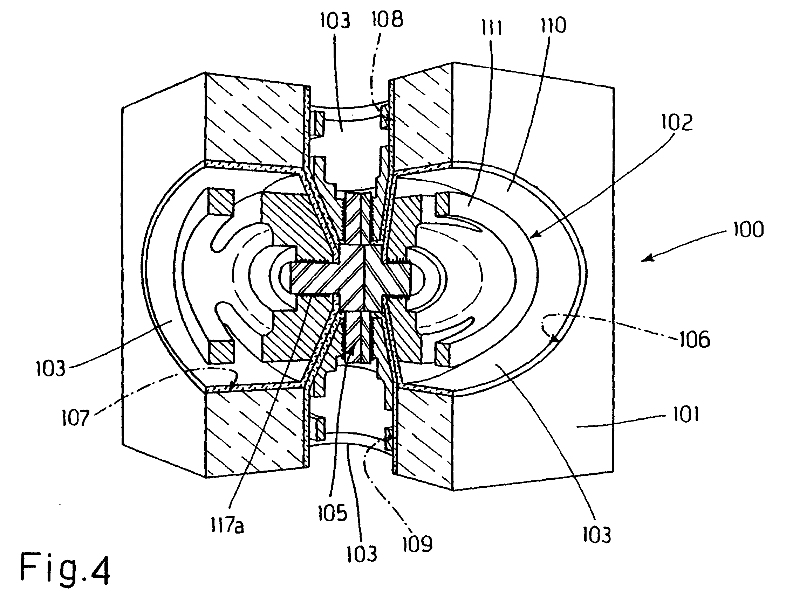

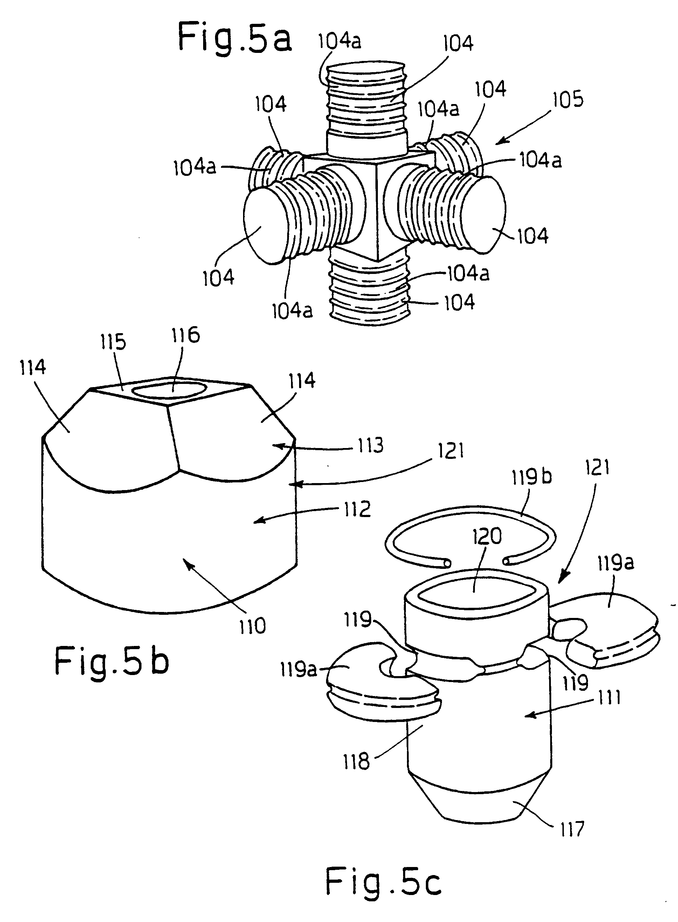

Figures 4 and 5 show a second embodiment of the present invention.

In this case, the connecting device, here indicated 100, comprises a main outer body 101, and a number of parts 103 defining a spider 102.

Each part 103 of spider 102 comprises a pin 104 (Figure 5a) with connecting means described in detail later on; and pins 104 combine to form a central core 105 of spider 102 (Figure 5a), extend in respective perpendicular directions from a central body, and comprise respective threads 104a.

Main outer body 101 comprises a number of holes 106, 107, 108, 109 of such a diameter as to permit smooth insertion of respective component parts 103 of spider 102 inside main outer body 101.

Each part 103 may be thought of as ideally comprising a pin 104 (even though connected integrally to the other pins 104 to form core 105), a respective bell 110 (Figure 5b), and a respective connecting element 111 (Figure 5c). Bell 110 and respective connecting element 111 define a respective arm 121 of spider 102; bell 110 comprises a cylindrical first portion 112 connected to a truncated-pyramid-shaped second portion 113, the flat lateral faces 114 of which rest on the similar faces 114 of adjacent bells 110; and the top face 115 of truncated-pyramid-shaped second portion 113 comprises a through hole 116 slightly larger in diameter than pins 104 of core 105.

As shown in Figure 4, truncated-pyramid-shaped portion 113 of bell 110 comprises a truncated-cone-shaped inner surface, and supports a respective truncated-cone-shaped portion 117 of a respective connecting element 111 (Figure 5c), which also comprises a further cylindrical portion 118 having through seats 119 for receiving tabs 119a retained elastically by a retaining ring 119b. The respective inner surfaces of tabs 119a mate stably with advantageously skittle-shaped complementary connecting means (not shown in Figure 5c) inserted inside an opening 120; and truncated-cone-shaped portion 117 of connecting element 111 comprises an internal thread 117a engaged by thread 104a formed on respective pin 104 of core 105.

Assembly of core 105, bells 110 and connecting elements 111 defining arms 121 is clearly understandable from Figure 4:
(A) Firstly, core 105 - which, as stated, is of such a size as to permit smooth insertion into main outer body 101 - is inserted through each of holes 106-109.
(B) A bell 110 is inserted inside each of holes 106-109 in main outer body 101, so that a pin 104 of core 105 is fitted through hole 116 in the top face 115 of bell 110, and therefore projects inside bell 110; and
(C) A connecting element 111 is inserted inside respective bell 110 and screwed onto respective pin 104 of core 105 to tighten bell 110 inside respective hole 106-109 and against the other adjacent bells 110.

In other words, faces 114 of truncated-pyramid-shaped portion 113 of each bell 110 rest on faces 114 of the adjacent bells 110. In this case, too, core 105, bells 110 and connecting elements 111 may be made of metal, in particular steel or aluminium.

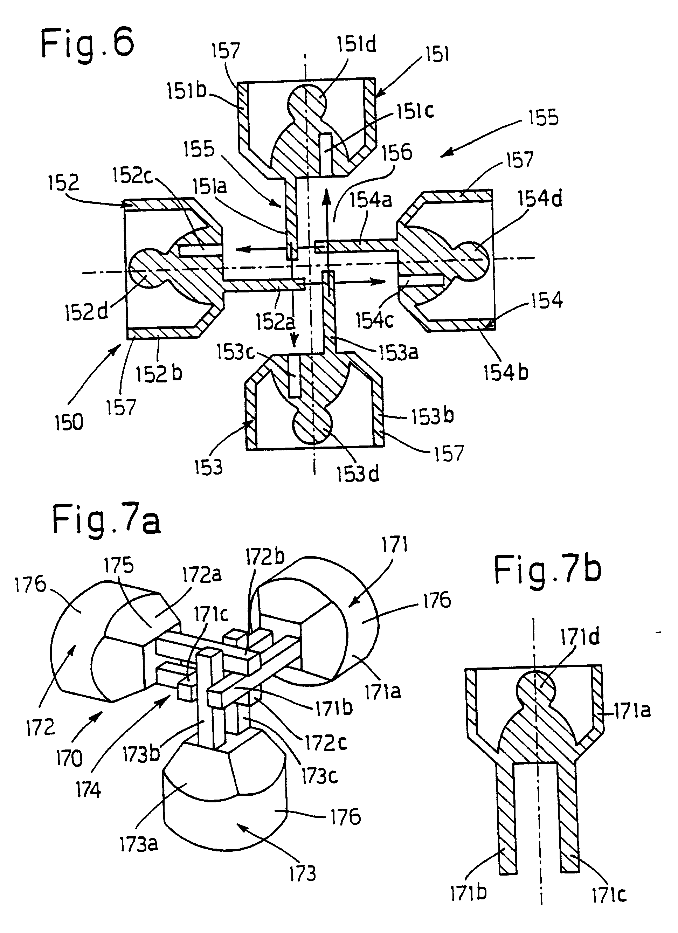

Figure 6 shows a third embodiment of the present invention.

For the sake of clarity, Figure 6 does not show the main outer body, which, however, may be identical to body 2 in Figure 1 or body 101 in Figure 4.

In this case, the connecting device, here indicated 150, comprises a main outer body (not shown); and a spider 155 made of different material from the main outer body, and in turn comprising a number of parts 151, 152, 153, 154. In this case, core 156 of spider 155 comprises a number of pins 151a, 152a, 153a, 154a integral with the bottom of respective bells 151b, 152b, 153b, 154b, and which are forced inside respective seats 153c, 154c, 151c, 152c formed in the bottom of respective bells 153b, 154b, 151b, 152b.

In the Figure 6 embodiment, pin 151a is obviously forced inside seat 153c formed in the bottom of the opposite bell 153b, and likewise for all the other pins. The concave portions of bells 151b, 152b, 153b, 154b house respective skittles 151d, 152d, 153d, 154d, which, together with respective bells 151b, 152b, 153b, 154b, define respective arms 157 comprising connecting means engaged by complementary connecting means on the lath elements (not shown in Figure 6). In other words, skittles 151d, 152d, 153d, 154d in this embodiment perform the same function as connecting elements 111 in the Figure 4 and 5c embodiment.

It is important to note that, in the Figure 6 embodiment, the bottom of bells 151b, 152b, 153b, 154b is substantially truncated-cone-shaped, and devices 150 may be formed with a core 156 comprising two, four or six pins 151a, 152a, 153a, 154a. Obviously, if only skittles 151d and 152d, for example, are to be used, holes 106-109 corresponding to skittles 153d and 154d may either be plugged during manufacture of device 150, or not formed at all in the main outer body (Figure 4).

The fourth embodiment in Figure 7 is similar to the one in Figure 6, and shows a connecting device 170 comprising a main outer body (not shown for the sake of simplicity), and a spider 174 in turn comprising parts 171, 172, 173. Core 175 is defined by substantially fork-shaped pairs of pins 171b,171c; 172b,172c; 173b,173c integral with the bottom of respective bells 171a, 172a, 173a, and which engage the corresponding perpendicular pairs of pins 171b,171c; 172b,172c; 173b,173c integral with adjacent bells 171a, 172a, 173a. As before, bells 171a, 172a, 173a may also house respective skittles 171d, 172d, 173d (only one shown in Figure 7b), which, together with respective bells 171a, 172a, 173a, define respective arms 176 of spider 174 for mating with complementary connecting means on the lath elements.

Obviously, to prevent detachment, the tightness provided for in the Figure 6 and 7 embodiments is calculated as a function of the axial load produced on each pair of pins 171b,171c; 172b,172c; 173b,173c by the respective lath element.

In particular, in the Figure 6 and 7 embodiments, provision may be made for injecting appropriate resins into the main outer body, through the holes formed in the body, to lock the component parts of the spider stably to one another and to the body.

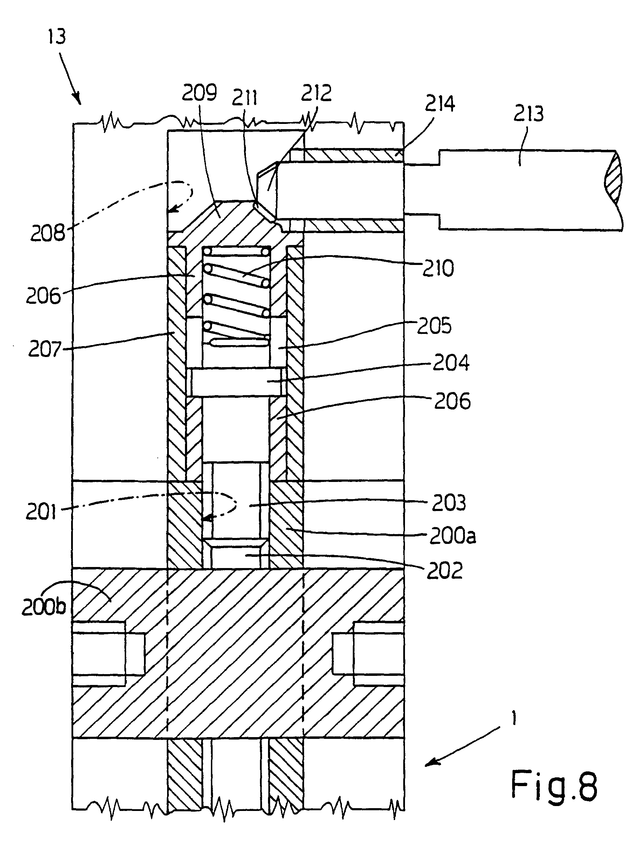

Figure 8 shows, purely by way of example, connecting, complementary connecting, and fastening means which may be applied to the device according to the present invention.

More specifically, in Figure 8, the connecting, complementary connecting, and fastening means are applied to a connecting device 1 integral or not with a first lath element (Figures 2, 3) and connected to a second lath element 13.

The bushes, here indicated 200a, 200b, are conventional types identical to those described with reference to Figure 1; a threaded hole 201 is engaged by the threaded head 202 of a cylindrical male element 203 comprising, at the other end, a pin 204, the projecting portions of which are free to slide vertically inside a longitudinal opening 205 formed in a tubular element 206; and tubular element 206 rotates freely inside a tubular bush 207 inserted tightly inside a seat 208 on lath element 13.

Tubular element 206 is closed at the innermost end by a projecting disk 209 resting on the edge of tubular bush 207; a normal coil spring 210 presses at one end on the inner face of disk 209, and rests at the other end on male element 203; and a gear 211 extends from disk 209 inside seat 208, and meshes with a bevel pinion 212 forming part of a tubular tool 213 inserted inside a guide 214.

When turned in a first direction, tool 213 turns disk 209 to rotate male element 203, so that the threaded head 202 of male element 203, which also travels vertically by virtue of opening 205, engages threaded hole 201 of bush 200a to bring together and tighten the two supporting elements. Conversely, when turned in the opposite direction, tool 213 releases lath element 13 and connecting device 1.

Clearly, changes may be made to the connecting device as described and illustrated herein without, however, departing from the scope of the present invention as specified in the claims.

## Claims

1. A device (1; 1'; 13"; 100; 150; 170) for connecting at least one lath element (13'; 13"), the device (1; 1'; 13"; 100; 150; 170) comprising a main outer body (2; 101) formed in one piece from a first material, and at least one resisting element (15; 102; 155; 174) having connecting means (10', 10", 11', 11", 12', 12"; 110, 111; 151b, 151d, 152b, 152d, 153b, 153d, 154b, 154d; 171a, 171d, 172a, 172d, 173a, 173d) for connecting said at least one lath element (13'; 13"); said at least one resisting element (15; 102; 155; 174) comprising a number of parts (6, 7, 8; 103; 151, 152, 153, 154; 171, 172, 173) substantially housed in said main outer body (2; 101), and being made of a second material, other than the first material, for resisting mechanical stress; the device (1; 1'; 13"; 100; 150; 170) being **characterized in that** said at least one resisting element (15; 102; 155; 174) is a spiderlike resisting element (15; 102; 155; 174) comprising a core (9; 105; 156; 175), and a number of arms (9a; 121; 157; 176) extending from said core (9; 105; 156; 175) and in turn comprising said connecting means (10', 10", 11', 11", 12', 12"; 110, 111; 151b, 151d, 152b, 152d, 153b, 153d, 154b, 154d; 171a, 171d, 172a, 172d, 173a, 173d).

2. A device (1; 1'; 13"; 100; 150; 170) as claimed in Claim 1, wherein said core (105) is formed in one solid piece.

3. A device (1; 1'; 13"; 100; 150; 170) as claimed in Claim 1, wherein said core (9; 156; 175) comprises a number of separable portions (6c, 7c, 8c; 151a, 152a, 153a, 154a; 171b, 171c, 172b, 172c, 173b, 173c).

4. A device (1; 1'; 13"; 100; 150; 170) as claimed in Claim 2 or 3, wherein said connecting means (10', 10", 11', 11", 12', 12"; 110, 111; 151b, 151d, 152b, 152d, 153b, 153d, 154b, 154d; 171a, 171d, 172a, 172d, 173a, 173d) are housed entirely in said main outer body (2; 101).

5. A device (1; 1'; 13"; 100; 150; 170) as claimed in Claim 2, wherein said core (105) comprises a number of elements (104) having means (104a) for connection to said arms (121).

6. A device (1; 1'; 13"; 100; 150; 170) as claimed in Claim 5, wherein each of said arms (121) comprises a bell (110) and a connecting element (111) separate from each other.

7. A device (1; 1'; 13"; 100; 150; 170) as claimed in Claim 6, wherein said connecting element (111) comprises through seats (119) for receiving respective tabs (119a) retained elastically by a retaining ring (119b); the respective inner portions of said tabs (119a) mating stably with complementary connecting means fitted through an opening (120).

8. A device (1; 1'; 13"; 100; 150; 170) as claimed in Claim 3. wherein each of said arms (157; 176) comprises a bell (151b, 152b, 153b, 154b; 171a, 172a, 173a) connected stably to a respective skittle (151d, 152d, 153d, 154d; 171d, 172d, 173d).

9. A device (1; 1'; 13"; 100; 150; 170) as claimed in Claim 7, wherein each element (151a, 152a, 153a, 154a) constituting said core (156) is inserted tightly inside a corresponding seat (153c, 154c, 151c, 152c) formed in the bottom of the respective bell (153b, 154b, 151b, 152b).

10. A device (1; 1'; 13"; 100; 150; 170) as claimed in Claim 3, wherein each first pair of portions (171b, 171c, 172b, 172c, 173b, 173c) constituting said core (175) mates tightly with a corresponding second pair of portions (171b, 171c, 172b, 172c, 173b, 173c) perpendicular to said first pair of portions (171b, 171c, 172b, 172c, 173b, 173c).

11. A device (1; 1'; 13"; 100; 150; 170) as claimed in Claim 3, wherein said parts (6, 7, 8) fit one inside the other to form a core (9) and a number of arms (9a).

12. A device (1; 1'; 100; 150; 170) as claimed in any one of the foregoing Claims, wherein said main outer body (2; 101) is substantially in the form of a cube; and wherein the sides of said main outer body (2; 101) are of a length equal to the thickness of said at least one lath element (13'; 13").

13. A device (1; 1'; 13"; 100; 150; 170) as claimed in any one of the foregoing Claims, wherein one face of said main outer body (2; 101) contacts one end of said at least one lath element (13').

14. A device (1; 1'; 13"; 100; 150; 170) as claimed in any one of the foregoing Claims, wherein said main outer body (2; 101) is made of wood or plastic or glass, whereas said at least one resisting element (15; 102; 155; 174) is made of metal, in particular steel or aluminium.

15. A device (13") as claimed in any one of the foregoing Claims 1-10 and 14, wherein said main outer body (2; 101) is substantially parallelepiped to define a lath element (13").

16. A device (1; 1'; 13"; 100; 150; 170) as claimed in at least one of the foregoing Claims, wherein said at least one lath element (13'; 13") has a circular or square or rectangular cross section.

17. A lath element (13"), **characterized by** comprising, at at least one portion, a connecting device (1; 1'; 100; 150; 170) as claimed in Claims 1-14 and 16

18. A lath element (13") as claimed in Claim 17, wherein said at least one portion is one end.

19. A build-up structure (14', 14"), **characterized by** comprising a number of connecting devices (1; 1'; 100; 150; 170) as claimed in Claims 1-14 and 16, and a number of lath elements (13'; 13"), possibly lath elements (13") as claimed in Claim 18 or 19.

20. A build-up structure (14'; 14") as claimed in Claim 19, **characterized by** being modular.

21. A build-up structure (14'; 14") as claimed in Claim 19 or 20, wherein said connecting device (1) comprises, internally, said connecting means (201), whereas said lath element (13) comprises, internally, complementary connecting means (202) and tightening means (211, 212, 13).

22. A build-up structure as claimed in Claim 21, wherein said tightening means comprise a bevel coupling (211, 212).

## Patentansprüche

1. Vorrichtung (1; 1'; 13"; 100; 150; 170) zum Verbinden von mindestens einem Strebenelement (13'; 13"), wobei die Vorrichtung (1; 1'; 13"; 100; 150; 170) einen einstückigen, aus einem ersten Material gebildeten Hauptaußenkörper (2; 101) und mindestens ein Widerstandselement (15; 102; 155; 174) mit Verbindungsmitteln (10', 10", 11', 11'', 12', 12''; 110, 111; 151b, 151d, 152b, 152d, 153b, 153d, 154b, 154d; 171a, 171d, 172a, 172d, 173a, 173d) zum Verbinden des mindestens einem Strebenelements (13'; 13") umfaßt; wobei das mindestens eine Widerstandselement (15; 102; 155; 174) eine Anzahl von Teilen (6, 7, 8; 103; 151, 152, 153, 154; 171, 172, 173) aufweist, die im wesentlichen in dem Hauptaußenkörper (2; 101) untergebracht sind und aus einem zweiten, sich von dem ersten Material unterscheidenden Material zum Widerstehen von mechanischen Spannungen gefertigt sind; wobei die Vorrichtung (1; 1'; 13"; 100; 150; 170) **dadurch gekennzeichnet ist, daß** das mindestens eine Widerstandselement (15; 102; 155; 174) ein spinnenförmiges Widerstandselement (15; 102; 155; 174) ist, umfassend einen Kern (9; 105; 156; 175) und eine Anzahl von Armen (9a; 121; 157; 176), die sich von dem Kern (9; 105; 156; 175) aus erstrecken und wiederum die Verbindungsmittel (10', 10", 11', 11'', 12', 12"; 110, 111; 151b, 151d, 152b, 152d, 153b, 153d, 154b, 154d; 171a, 171d, 172a, 172d, 173a, 173d) aufweisen.

2. Vorrichtung (1; 1'; 13"; 100; 150; 170) nach Anspruch 1, wobei der Kern (105) aus einem massiven Stück gebildet ist.

3. Vorrichtung (1; 1'; 13"; 100; 150; 170) nach Anspruch 1, wobei der Kern (9; 156; 175) eine Anzahl von abnehmbaren Abschnitten (6c, 7c, 8c; 151a, 152a, 153a, 154a; 171b, 171c, 172b, 172c, 173b, 173c) umfaßt.

4. Vorrichtung (1; 1'; 13"; 100; 150; 170) nach Anspruch 2 oder 3, wobei die Verbindungsmittel (10', 10", 11', 11", 12', 12"; 110, 111; 151b, 151d, 152b, 152d, 153b, 153d, 154b, 154d; 171a, 171d, 172a, 172d, 173a, 173d) vollständig in dem Hauptaußenkörper (2; 101) untergebracht sind.

5. Vorrichtung (1; 1'; 13''; 100; 150; 170) nach Anspruch 2, wobei der Kern (105) eine Anzahl von Elementen (104) mit Mitteln (104a) zum Verbinden mit den Armen (121) aufweist.

6. Vorrichtung (1; 1'; 13"; 100; 150; 170) nach Anspruch 5, wobei jeder der Arme (121) eine Schelle (110) und ein Verbindungselement (111) umfaßt, die voneinander getrennt sind.

7. Vorrichtung (1; 1'; 13"; 100; 150; 170) nach Anspruch 6, wobei das Verbindungselement (111) durchgehende Aufnahmen (119) zum Aufnehmen von jeweiligen Lappen (119a) umfaßt, die elastisch durch einen Haltering (119b) gehalten sind; wobei die jeweiligen Innenabschnitte der Lappen (119a) dauerhaft mit den komplementären durch eine Öffnung (120) befestigten Verbindungsmitteln verbunden sind.

8. Vorrichtung (1; 1'; 13''; 100; 150; 170) nach Anspruch 3, wobei jeder der Arme (157; 176) eine Schelle (151b, 152b, 153b, 154b; 171a, 172a, 173a) umfaßt, die dauerhaft mit einem jeweiligen Kegel (151d, 152d, 153d, 154d; 171d, 172d, 173d) verbunden ist.

9. Vorrichtung (1; 1'; 13"; 100; 150; 170) nach Anspruch 7, wobei jedes den Kern (156) bildende Element (151a, 152a, 153a, 154a) in eine entsprechende Aufnahme (153c, 154c, 151c, 152c) festsitzend eingefügt ist, die in dem Boden der jeweiligen Schelle (153b, 154b, 151b, 152b) gebildet ist.

10. Vorrichtung (1; 1'; 13''; 100; 150; 170) nach Anspruch 3, wobei jedes erste, den Kern (175) bildende Paar der Abschnitte (171b, 171c, 172b, 172c, 173b, 173c)eng mit einem entsprechenden zweiten Paar der Abschnitte (171b, 171c, 172b, 172c, 173b, 173c) paßt, das senkrecht zu dem ersten Paar der Abschnitte (171b, 171c, 172b, 172c, 173b, 173c) steht.

11. Vorrichtung (1; 1'; 13"; 100; 150; 170) nach Anspruch 3, wobei die Teile (6, 7, 8) gegenseitig eingefügt sind, um einen Kern (9) und eine Anzahl von Armen (9a) zu bilden.

12. Vorrichtung (1; 1'; 13"; 100; 150; 170) nach einem der vorherigen Ansprüche, wobei der Hauptaußenkörper (2; 101) im wesentlichen würfelförmig ist; und wobei die Seitenflächen des Hauptaußenkörpers (2; 101) eine Länge aufweisen, die der Dicke des mindestens einen Strebenelements (13'; 13") entspricht.

13. Vorrichtung (1; 1'; 13''; 100; 150; 170) nach einem der vorherigen Ansprüche, wobei eine Fläche des Hauptaußenkörpers (2; 101) ein Ende des mindestens einen Strebenelements (13') berührt

14. Vorrichtung (1; 1'; 13''; 100; 150; 170) nach einem der vorherigen Ansprüche, wobei der Hauptaußenkörper (2; 101) aus Holz oder Kunststoff oder Glas hergestellt ist, während das mindestens eine Widerstandselement (15; 102; 155; 174) aus Metall, insbesondere aus Stahl oder Aluminium, gefertigt ist.

15. Vorrichtung (13'') nach einem der vorherigen Ansprüche 1-10 und 14, wobei der Hauptaußenkörper (2; 101) im wesentlichen quaderförmig ist, um ein Strebenelement (13'') zu definieren.

16. Vorrichtung (1; 1'; 13"; 100; 150; 170) nach mindestens einem der vorherigen Ansprüche, wobei das mindestens eine Strebenelement (13'; 13'') einen kreisförmigen oder quadratischen oder rechtwinkligen Querschnitt aufweist.

17. Strebenelement (13''), **dadurch gekennzeichnet, daß** es mindestens an einem Abschnitt eine Verbindungsvorrichtung (1; 1'; 100; 150; 170) nach den Ansprüchen 1 bis 14 und 16 umfaßt.

18. Strebenelement (13'') nach Anspruch 17, wobei der mindestens eine Abschnitt ein Ende ist.

19. Aufbaustruktur (14'; 14''), **dadurch gekennzeichnet, daß** sie eine Anzahl von Verbindungsvorrichtungen (1; 1'; 100; 150; 170) nach den Ansprüchen 1 bis 14 und 16 und eine Anzahl von Strebenelementen (13'; 13''), ggf. Strebenelemente (13'') nach Anspruch 18 oder 19 umfaßt.

20. Aufbaustruktur (14'; 14'') nach Anspruch 19, **dadurch gekennzeichnet, daß** sie modular ist.

21. Aufbaustruktur (14'; 14'') nach Anspruch 19 oder 20, wobei die Verbindungsvorrichtung (1) das Befestigungsmittel (201) eingebaut aufweist, während das Strebenelement (13) das komplementäre Verbindungsmittel (202) und die Spannelemente (211, 212, 213) eingebaut umfaßt.

22. Aufbaustruktur nach Anspruch 21, wobei die Spannelemente eine schräge Verbindung (211, 212) aufweisen.

## Revendications

1. Un dispositif (1 ; 1' ; 13" ; 100 ; 150 ; 170) destiné à relier au moins un élément de lattage (13' ; 13''), le dispositif (1 ; 1' ; 13'' ; 100; 150; 170) comprenant un corps principal extérieur (2, 101) formé d'une seule pièce à partir d'un premier matériau, et au moins un élément de résistance (15 ; 102 ; 155; 174) présentant des moyens de raccordement (10', 10'', 11', 11'', 12', 12'' ; 110, 111 ; 151b, 151d, 152b, 152d, 153b, 153d, 154b, 154d; 171a, 171d, 172a, 172d, 173a, 173d) destinés à relier au moins un élément de lattage (13' ; 13''), ledit au moins un élément de résistance (15 ; 102 ; 155 ; 174) comprenant un certain nombre de parties (6, 7, 8, 103, 151, 152, 153, 154, 171, 172, 173) logés pour l'essentiel dans ledit corps principal extérieur (2, 101) et étant fabriqué à partir d'un second matériau, différent du premier matériau, de manière à résister aux contraintes mécaniques ; le dispositif (1 ; 1' ; 13'' ; 100 ; 150 ; 170) étant **caractérisé en ce que** ledit au moins un élément de résistance (15 ; 102 ; 155 ; 174) est un élément de résistance en forme de croisillon (15 ; 102 ; 155 ; 174) comprenant un noyau (9 ; 105 ; 156 ; 175) et un certain nombre de bras (9a ; 121 ; 157 ; 176) s'étendant à partir dudit noyau (9 ; 105 ; 156 ; 175) et comprenant à son tour lesdits moyens de raccordement (10', 10", 11', 11'', 12', 12'', 110, 111, 151b, 151d, 152b, 152d, 153b, 153d, 154b, 154d, 171a, 171d, 172a, 172d, 173a, 173d).

2. Un dispositif (1 ; 1' ; 13'' ; 100 ; 150 ; 170) selon la revendication 1, dans lequel ledit noyau (105) est formé d'une seule pièce massive.

3. Un dispositif (1; 1' ; 13'' ; 100 ; 150 ; 170) selon la revendication 1, dans lequel ledit noyau (9; 156 ; 175) comprend un certain nombre de parties pouvant être séparées (6c, 7c, 8c; 151a, 152a, 153a, 154a; 171b, 171c, 172b, 172c, 173b, 173c).

4. Un disposiaif (1 ; 1' ; 13'' ; 100 ; 150 ; 170) selon la revendication 2 ou la revendication 3, dans lequel lesdits moyens de raccordement (10', 10'' ; 11', 11'' ; 12', 12'' ; 110, 111 ; 151b, 151d, 152b, 152d, 153b, 153d, 154b, 154d, 171a, 171d, 172a, 172d, 173a, 173d) sont entièrement logés dans ledit corps principal extérieur (2 ; 101).

5. Un dispositif (1 ; 1' ; 13'' ; 100 ; 150 ; 170) selon la revendication 2, dans lequel ledit noyau (105) comprend un certain nombre d'éléments (104) présentant des moyens (104a) destinés à être reliés auxdits bras (121).

6. Un dispositif (1 ; 1' ; 13'' ; 100 ; 150 ; 170) selon la revendication 5, dans lequel chacun desdits bras (121) comprend une cloche (110) et un élément de raccordement (111) séparés l'un de l'autre.

7. Un dispositif (1 ; 1' ; 13'' ; 100 ; 150 ; 170) selon la revendication 6, dans lequel ledit élément de raccordement (111) comprend des surfaces d'appui traversantes (119) destinées à recevoir des pattes respectives (119a) maintenues de manière élastique par un anneau de retenue (119b), les parties intérieures respectives desdites pattes (119a) s'accouplant de manière stable avec des moyens de raccordement complémentaires fixés à travers une ouverture (120).

8. Un dispositif (1 ; 1' ; 13'' ; 100 ; 150 ; 170) selon la revendication 3, dans lequel chacun desdits bras (175, 176) comprend une cloche (151b, 152b, 153b, 154b, 171a, 172a, 173a) reliée de manière stable à une quille respective (151d, 152d, 153d, 154d, 171d, 172d, 173d).

9. Un dispositif (1 ; 1' ; 13'' ; 100 ; 150 ; 170) selon la revendication 7, dans leduel chaque élément (151a, 152a, 153a, 154a) constituant ledit noyau (156) est fermement inséré à l'intérieur d'une surface d'appui correspondante (153c, 154c, 151c, 152c) formée au niveau de la partie inférieure de la cloche respective (153b, 154b, 151b, 152b).

10. Un dispositif (1 ; 1' ; 13" ; 100 ; 150 ; 170) selon la revendication 3, dans lequel chaque première paire de parties (171b, 171c, 172b, 172c, 173b, 173c) s'accouple fermement avec une deuxième paire de parties correspondantes (171b, 171c, 172b, 172c, 173b, 173c) perpendiculaires à ladite première paire de parties (171b, 171c, 172b, 172c, 173b, 173c).

11. Un dispositif (1 ; 1' ; 13'' ; 100 ; 150 ; 170) selon la revendication 3, dans lequel lesdites parties (6, 7, 8) s'ajustent l'une à l'intérieur de l'autre de manière à former un noyau (9) et un certain nombre de bras (9a).

12. Un dispositif (1 ; 1' ; 13'' ; 100 ; 150; 170) selon l'une quelconque des revendications précédentes, dans lequel ledit corps principal extérieur (2; 101) prend pour l'essentiel la forme d'un cube, et dans lequel les côtés dudit corps principal extérieur (2 ; 101) sont de longueur égale à l'épaisseur audit au moins un élément de lattage (13' ; 13'').

13. Un dispositif (1 ; 1'; 13'' ; 100 ; 150 ; 170) selon l'une quelconque des revendications précédentes, dans lequel un côté dudit corps principal extérieur (2 ; 101) entre en contact avec une extrémité dudit au moins un élément de lattage (13').

14. Un dispositif (1 ; 1' ; 13'' ; 100 ; 150 ; 170) selon l'une quelconque des revendications précédentes, dans lequel ledit corps principal extérieur (2 ; 101) est fabriqué à partir de bois, de plastique ou de verre, tandis que ledit au moins un élément de résistance (15 ; 102 ; 155 ; 174) est fabriqué à partir de métal, notamment en acier ou en aluminium.

15. Un dispositif (13'') selon l'une quelconque des revendications 1 à 10 et 14, dans lequel ledit corps principal extérieur (2; 101) est sensiblement parallélépipédique de manière à définir un élément de lattage (13").

16. Un dispositif (1 ; 1' ; 13" ; 100 ; 150 ; 170) selon l'une quelconque des revendications précédentes, dans lequel ledit au moins un élément de lattage (13' ; 13") comprend une section transversale ronde, carrée ou rectangulaire.

17. Un élément de lattage (13") **caractérisé en ce qu'**il comprend, sur au moins une partie, un élément de raccordement (1 ; 1" ; 13'' ; 100 ; 150 ; 170) selon l'une des revendications 1 à 14 et 16.

18. Un élément de lattage (13") selon la revendication 17, dans lequel ladite au moins une partie constitue une extrémité.

19. Une structure construite (14' ; 14") **caractérisée en ce qu'**elle comprend un certain nombre de dispositifs de raccordement (1 ; 1' ; 13" ; 100 ; 150 ; 170) selon l'une des revendications 1 à 14 et 16, et un certain nombre d'éléments de lattage (13' ; 13"), éventuellement les éléments de lattage (13") selon la revendication 18 ou 19.

20. Une structure construite (14' ; 14'') selon la revendication 19, **caractérisée par** le fait d'être modulaire.

21. Une structure construite (14' ; 14'') selon la revendication 19 ou 20, dans laquelle ledit élément de raccordement (1) comprend à l'intérieur de celui-ci des éléments de raccordement complémentaires (202) et des éléments de serrage (211, 212, 213).

22. Une structure construite selon la revendication 21, dans laquelle lesdits éléments de serrage comprennent un engrenage conique (211, 212).
